Europäisches Patentamt

European Patent Office

Office européen des brevets

(11) Publication number: **0 188 279**
A2

# (12) EUROPEAN PATENT APPLICATION

(21) Application number: 86100439.8

(22) Date of filing: 15.01.86

(51) Int. Cl.⁴: **F 16 C 17/14**
F 16 C 33/10

(30) Priority: 17.01.85 US 692138

(43) Date of publication of application:
23.07.86 Bulletin 86/30

(84) Designated Contracting States:
DE FR GB SE

(71) Applicant: The B.F. GOODRICH Company
Dept. 0015 WHB-6 500 South Main Street
Akron, Ohio 44318(US)

(72) Inventor: Kramer, James Harmon
2793 Erie Drive
Akron Ohio 44313(US)

(72) Inventor: Orndorff, Roy Lee, Jr.
7828 Birchwood Drive
Kent Ohio 44240(US)

(74) Representative: von Kreisler, Alek, Dipl.-Chem. et al,
Deichmannhaus am Hauptbahnhof
D-5000 Köln 1(DE)

(54) Water lubricated bearing.

(57) A water lubricated bearing assembly having a plurality of circumferentially spaced first set of bearing elements with substantially flat surfaces and water courses therebetween supporting a shaft for rotation. Certain ones or all of such bearing elements support a second set of bearing element that are moveable radially into supporting engagement with the shaft such that either the first set or the second set of bearing elements are the prime supports for the shaft and wherein such first and second set of bearing elements have different coefficient of friction.

Croydon Printing Company Ltd.

-1-
# WATER LUBRICATED BEARING

## BACKGROUND OF THE INVENTION

This invention relates to a bearing assembly and more particularly to elastomeric journal bearing assemblies which are used in supporting marine propeller shafts such as in ships. Elastomeric journal bearing assemblies have been found to be particularly suited for this purpose because of their exceptional ability to withstand the harmful effects of corrosive fluids and to abrasion resulting from bits of foreign materials which are carried in suspension in the sea water or other liquids in which the shaft and journal bearing assembly operates. Such elastomeric journal bearing assemblies have been made with circumferentially spaced flat rubber surfaces because it has been found that smooth rubber lubricated with water has a very low coefficient of friction. A serious limitation to water lubricated rubber bearings is the high coefficient of friction of dry rubber during start of rotation or at very low rotation of the shaft. Attempts to overcome this has been directed to continual rotation of the shaft at a slow idle speed, however, this is not a satisfactory solution. Another attempt to solve difficult start-up is to precondition the bearings for starting by pumping water into the groove between bearings, however, it is extremely difficult to introduce water to the area between the shaft and the flat rubber surface that is in frictional contact with the shaft.

The present invention provides a new and improved elastomeric bearing assembly that has a plurality of circumferentially spaced elastomeric

-2-

bearing elements or segments divided by the longitudinal spaced water groove for low friction running and with the additional feature of radially moveable plastic inserts located within the spaced elastomeric bearing elements for operational use in start up. Thus provisions are made for low friction resistance during start up by running the shaft on plastic inserts and once sufficient speed is achieved the shaft is run on the water lubricated elastomeric elements by retracting the plastic inserts so that the shaft only contacts the circumferentially spaced elastomeric bearing elements. A modification of this structure is to make the circumferentially spaced elastomeric bearing elements radially moveable within circumferentially spaced plastic support elements whereby the propeller shaft is selectively supported by either the plastic or the elastomeric elements for rotation. With such structure, there will be an effective reduction in power consumed as well as a reduction in noise generated. Further modifications use only selected bearings that have moveable inserts which are generally located on the lower portions of the bearing assembly.

## SUMMARY OF THE INVENTION

The present invention is directed to a new and improved water lubricated bearing assembly having a rigid outer housing that supports a plurality of circumferentially spaced bearing elements of elastomeric material having radially inwardly disposed bearing surfaces divided by longitudinally extending water passages or grooves. Certain ones or all of the bearing elements have an insert therein of plastic material which may be projected beyond the surface of the elastomeric bearing elements. A shaft is supported selectively by either the plastic material to provide bearing surfaces with a low coefficient of friction under dry starting conditions or an elastomeric bearing surface with a low coefficient of friction under water lubricated conditions for friction. As a modification, the bearing assembly can have bearing elements composed of both elastomeric or plastic elements selectively moveable into contact with the shaft to be rotated such that either the circumferentially spaced plastic elements or the rubber bearing elements are in contact with the drive shaft.

BRIEF DESCRIPTION OF THE DRAWINGS

Figure 1 is a side elevational view of a strut and bearing assembly for supporting a rotatable shaft;

Figure 2 is a front elevational view of the strut and bearing assembly taken on line 2-2 of Figure 1 with a portion of the cap broken away to show the bearing staves;

Figure 3 is a cross-sectional view of one of the bearing staves;

Figure 4 is a side elevational view in cross-section of the strut and bearing assembly taken on line 4-4 of Figure 2;

Figure 5 is a fragmentary cross-sectional view of a portion of the bearing assembly of plastic staves and their elastomeric inserts taken on line 5-5 of Figure 4 for a rotating condition of a drive shaft;

Figure 6 is a fragmentary cross-sectional view of a portion of the bearing assembly of the plastic staves and their inserts similar to Figure 5 but in a starting condition for the drive shaft;

-4-

Figure 7 is a side elevational cross-sectional view of a modified form of the strut and bearing assembly similar to Figure 4;

Figure 8 is a fragmentary cross-sectional view of the bearing assembly with elastomeric staves and their plastic inserts taken on line 8-8 of Figure 7 showing a shaft in a run condition;

Figure 9 is a fragmentary cross-sectional view of the bearing assembly shown in Figure 8 but with the plastic inserts radially extended and contacting the shaft in a starting condition;

Figure 10 is a graph of a test performed illustrating the difference in coefficient of friction between running a shaft on rubber bearings versus running a shaft on ultra-high molecular weight bearings;

Figure 11 is a cross-sectional view of a modified form of the invention.


DETAILED DESCRIPTION

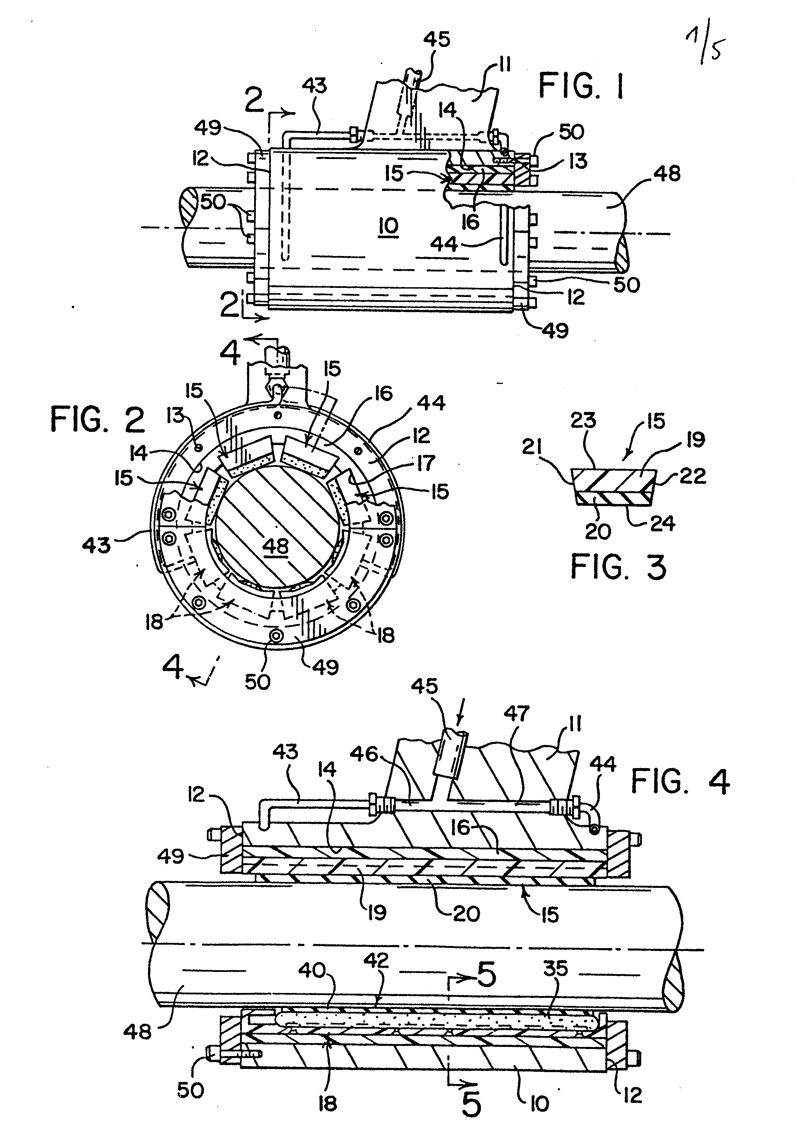

Referring to the drawings, wherein like reference numerals designate like or corresponding parts throughout the several views, there is shown in Figure 1 a longitudinally extending bearing housing 10 supported by a strut 11. Housing 10 has a pair of annular end faces 12, with each end face having a plurality of circumferentially spaced threaded bores 13 extending longitudinally therein. The housing 10 has a central bore 14 to accommodate a bearing assembly to be described. The bearing assembly can be a single cast unit or composed of a plurality of circumferentially spaced bearing segments or staves. In the example shown, the central bore 14 receives a cylindrical shell 16 having a plurality of circumferentially spaced dovetailed grooves 17 suitably machined therein.

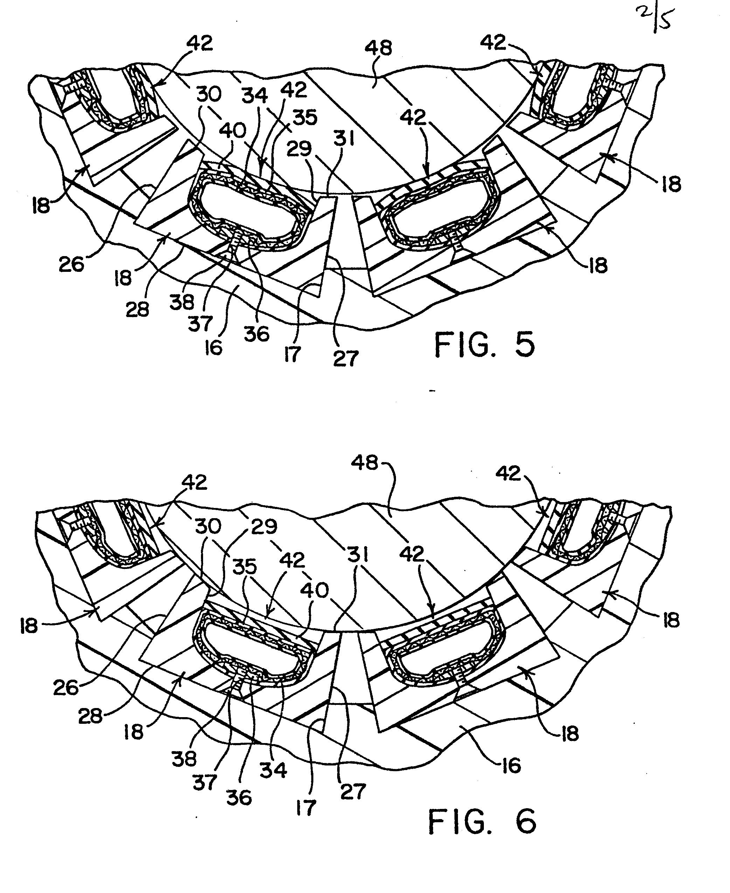

As seen in Figure 2, there are eight dovetail grooves 17 with four of the upper grooves 17 receiving staves or bearing segments 15 and the lower grooves 17 receiving four staves 18. The staves 15 as seen in Figure 3 is composed of a rigid layer of ultra high molecular weight polyethylene material 19 suitably bonded to a layer of elastomeric material 20. Stave 15 is trapezoidal in cross-sectional shape having a pair of side surfaces or faces 21-22, a linear disposed outer flat face 23 and an inner flat bearing face or surface 24. A portion of the respective side surfaces 21 and 22 are in abutting contact with the dovetailed grooves 17. All of staves 18 are similar in construction and only one will be described. Stave 18 (Figure 5) is of trapezoidal cross sectional shape made from a ultra high molecular weight polyethylene material with tapering side surfaces 26-27, an outer flat face 28 and a centrally disposed recess 29 which leaves a pair of linear surfaces 30 and 31 on the radially inner most portion of the stave. As seen in Figures 4 and 5, portions of the respective side surfaces 26 and 27 are received by the lower dovetailed grooves 17.

The central recess 29 on the lower four staves 18 extends downwardly therein providing an arcuately shaped bottom surface therein. A relatively flat tubular hose 34 is located within such recess 29 having an outer rubberized distensible fabric 35 encompassing such tubular hose 34 and forms a cylindrical tube. A longitudinally extending plate member 36 is located between tubular hose 34 and the rubberized fabric 35. Each segment 18 has a plurality of bores 37 along the radial outer portion. Each bore 37 receives a threaded bolt 38 that is suitably threadedly connected to the plate member 36, thus retaining the distensible fabric 35 and inflatable hose 34 within recess 29. The radially inwardly most surface of cylindrical shaped distensible fabric 35 is bonded to a flat thin layer of elastomer or rubber 40 of medium softness such as 65 to 80 Durometer A scale, with a width approximately 10 times its thickness. Such thin layer of rubber 40 can be vulcanized to the cylindrical shaped distensible rubberized fabric 35. The respective layers of rubber 40, tube and hose 34, and fabric 35 form the plurality of circumferentially spaced bearing elements 42.

The respective tubular hoses 34 in the four staves 18 are interconnected by suitable hoses in series and the respective ends of such hoses as seen in Figure 1 are connected radially outwardly to conduits 43 and 44 which are located along suitable grooves along the outer periphery of the housing 10. A conduit 45 located in the strut 11 communicates via suitable passageways 46 and 47 to conduits 43 and 44. Conduit 45 is connected to a suitable pressure source not shown that can selectively deflate or pressurize the respective hoses 34 within the recesses 29 of staves 18 to project the bearing element 42 and its radial innermost surface of rubber layer 40 into frictional contact with a shaft 48, thereby eliminating all fictional contact between shaft 48 and surfaces 30 and 31 of segment or stave 18. In this described condition, shaft 48 only makes contact with the rubber surfaces or layer 40, which is the normal condition for running shaft 48.

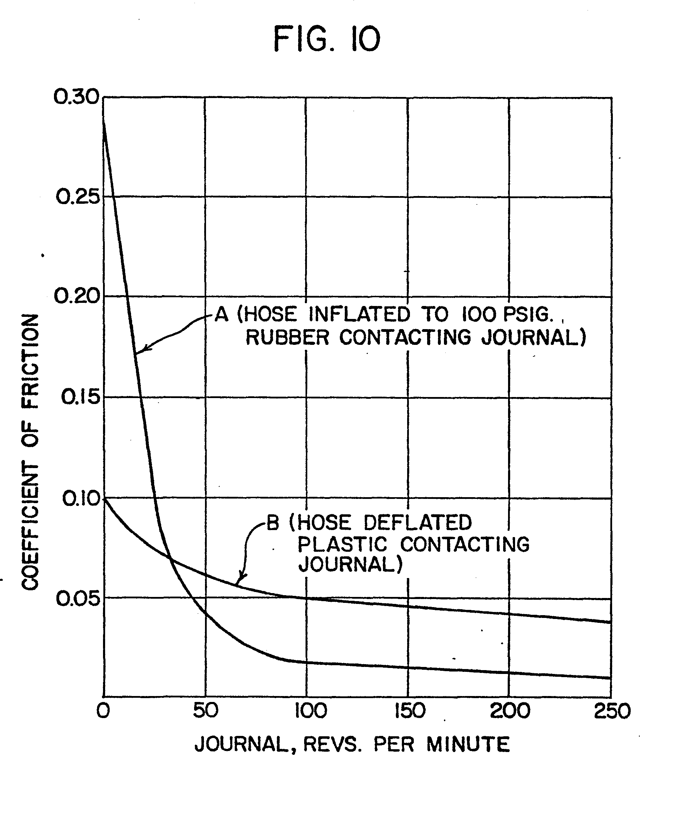

In the operation of the bearing assembly (Figures 4 and 5), assume that shaft 48 is stationary and that hose 34 is in a deflated condition. Shaft 48 under these conditions will remain in contact with the plastic surfaces 30 and 31 of stave or bearing segments 18 and in light contact with the rubber surfaces 24 of stave 15. In this condition the circumferentially spaced plastic bearing surfaces 30 and 31 form the primary set of circumferentially spaced bearing elements which support shaft 48. As shaft 48 is begun to be rotated, the primary friction to be overcome will be between shaft 48 and the plastic surfaces 30 and 31 which is relatively low. During this period of start up, water will be circulating between shaft 48 and the radial innermost surfaces of the rubber layer 40. As the shaft continues to increase in speed, hose 34 is pressurized thereby moving the radial surfaces of rubber layers 40 (which form a second set of circumferentially spaced bearing elements) into contact with the shaft 48 as depicted by Figure 5 eliminating contact between the shaft 48 and the first set of bearing elements (bearing surfaces 30 and 31). In this condition of operation the smooth rubber surfaces of layers 40 are lubricated with water providing a very low coefficient of friction such that no special lubricant is required. Thus the rubber layer or bearing elements 40 are used to support the load of shaft 48 only when the velocity of shaft 48 is sufficiently high enough to form a proper lubricating film between the shaft and the rubber surface of layer 40 of staves 18 as fluid is circulated through the clearance space around the shaft 48. Below this velocity and especially at zero velocity or start-up, the load of shaft 48 is supported primarily by the surfaces of the ultra high molecular weight polyethylene surfaces 30 and 31. The polyethylene surfaces have a very low and constant dry friction force values. The constant pressure support provided by the layer of rubber 40 due to the inflation of the hose 34 will lower the coefficient of friction due to thin film of lubricating water which flows around the shaft 48. Such rubber bearing elements efficiently utilize the low cost lubricant of dirty water that is readily available everywhere. The rubber effectively passes the dirt particles without damage to itself or the metal shaft 48. Figure 10 illustrates this condition wherein Curve A was obtained when the hose was inflated to 100 pounds per square inch gauge pressure (psig) or 703,100 kgs per square meter and only the rubber surfaces were in contact with the shaft. Curve B represents the condition where the hose is deflated and the shaft 48 is supported primarily by the high molecular weight plastic bearings for all velocity values. The point where the curves cross (31 RPM) is the operating point where the bearing surfaces would be shifted by inflation of the hose to achieve greater efficiency of operation.

The bearing assembly is retained within the central bore 14 of housing 10 by a pair of semi-circular retainer rings 49 acting as retainer means mounted on the respective end faces 12 of the cylindrically shaped housing 10. Rings 49 have a plurality of circumferentially spaced bores which receive cap screws 50 which are threaded into the respective bores 13 to thereby securely fasten the bearing assembly within the housing 10 and place on the shaft 48.

A modification of the described embodiment is to have all staves in the bearing assembly of the same construction as that of staves 18 rather than some of the construction of staves 15 and other as staves 18. All of the tubes 34 within staves 18 would be inflated or deflated simultaneously thus presenting either the rubber layer or the plastic portion of the staves to the shaft 48. The operation of this modification is substantially identical to that of the first described embodiment.

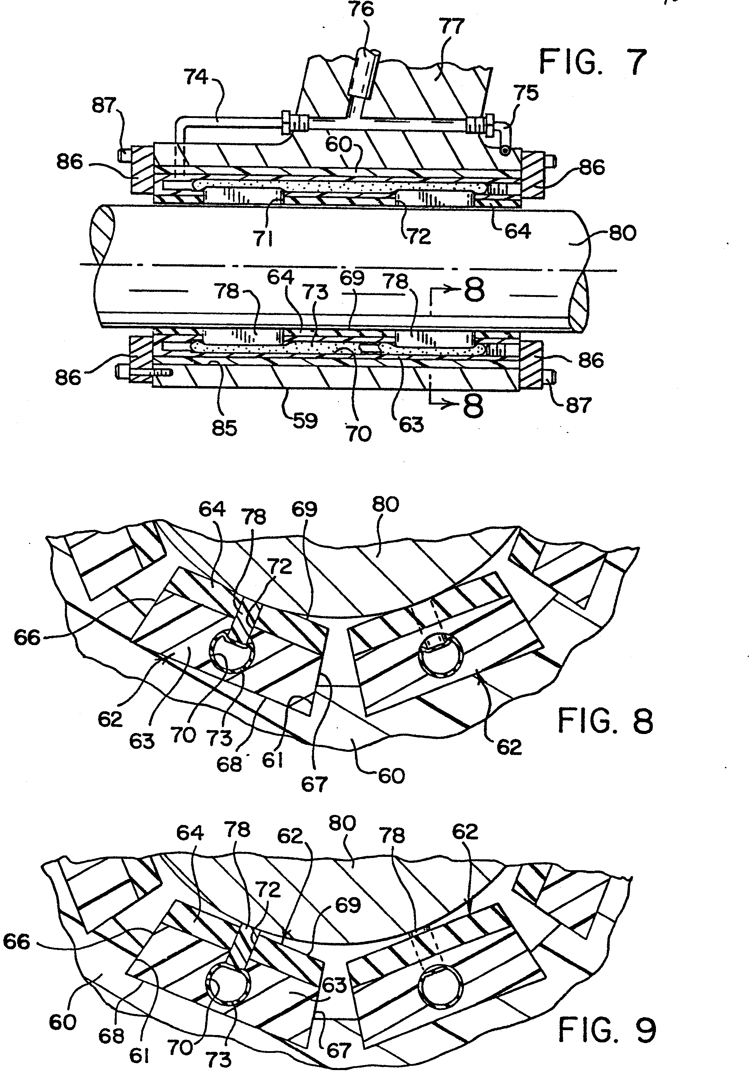

A further modification of the described embodiment is shown in Figs. 7 through 9 wherein the housing 59 supports a cylindrical shell 60 having a plurality of circumferentially spaced dovetailed grooves 61 suitably machined therein. Each dovetailed groove 61 receives a stave 62 composed of a rigid layer 63 of ultra high molecular weight polyethylene suitably bonded to a layer 64 of elastomeric material. All of the staves 62 are similar in construction and only one will be described. Stave 62 is trapezoidal in cross-sectional shape having side surfaces 66-67, a linear outer flat face 68 and a flat bearing surface 69 for the elastomeric layer 64. A portion of the respective side surfaces 66 and 67 are in abutting contact with the dovetailed groove 61 to maintain the staves 62 in their respective positions.

An elastomer is defined as a substance that can be stretched at room temperatures to at least twice its original length and, after having been stretched and the stress removed, returns with force to approximately its original length in a short time. (See Glossary of Terms as prepared by ASTM Committee on Rubber and Rubberlike Materials, published by the American Society for Testing Materials).

-10-

The elastomeric or rubber material that can be used can be any of the well known elastomers including for example natural rubber, copolymers of butadiene and acrylonitrile, copolymers of butadiene and styrene, copolymers of butadiene and alkyl acrylates, butyl rubber, olefin rubbers such as ethylene-propylene and EPDM rubber, fluocarbon rubbers, fluorisilicone rubbers, silicone rubbers, chlorosulfonated polyethylene, polyacrylates, polybutadiene, polychloroprene and the like.

The bearing element layer 63 is made of high molecular weight polyethylene having a melt flow index less than 0.15.

To prepare such bearing segments, element or stave 62 an elongated flat layer of elastomeric material such as nitrile rubbers such as polymers of butadiene and acrylonitrile is placed flat into a mold along with a layer of ultra high molecular weight polyethylene which is then molded and vulcanized into a desired shape. Such staves may be molded into a trapezoidal shape or suitably machined to the precise size and shape. Each stave 62 as seen in Figure 7 has a bore 70 extending longitudinally therein substantially for the full length thereof. In addition each stave 62 has a pair of recesses 71 and 72 (Figure 7) along their inner flat bearing surface 69 that extend from such surface 69 into bore 70. The respective bores 70 of each stave 62 houses a portion of an elongated hose 73, which hose 73 extends into all of the staves, such that hose 73 is a continuous hose having its respective ends connected to a pair of conduits 74 and 75 for further connection to a passageway and conduit 76 located in strut 77. Conduit 76 is connected to a suitable pressure source not shown that can selectively deflate or pressurize the hose 73 within the bores of staves 62 to control the radial movement of a rectangular shaped plastic insert 78 that is located in each recess 71 and 72 of stave 62. The plastic inserts 78 are made from a plastic material such as Teflon[R] or an ultra high molecular weight polyethylene material. Thus as seen in Figures 7 through 9, a drive shaft 80 is supported by either the plastic inserts 78 (Figure 9) or by the flat surface of elastomeric layer 64.

The bearing assembly is retained within a central bore 85 in housing 59 by a pair of semi-circular retainer rings 86 acting as retainer means mounted on the respective end sections of the cylindrically shaped housing 59. Rings 86 have a plurality of circumferentially spaced bores which receive cap screws 87 which are threaded into threaded bores in housing 59 to thereby securely fasten the bearing assembly to the housing 59 supporting shaft 80.

In the operation of the above described bearing assembly (Figures 7-9), assume that shaft 80 is stationary and that hose 73 is in a deflated condition as depicted by Figure 8. Shaft 80 under these conditions is in contact with the rubber surface of layer 64 of bearing segments or stave 62. Prior to attempting to start the rotation of shaft 80, pressurized fluid is introduced into hose 73 to distend such hose which moves the respective moveable plastic bearings 78 radially inwardly toward the axis of shaft 80, such that shaft 80 rests entirely on the plastic surfaces of bearings 78. Under these conditions water circulates through the clearance spaces between shaft 80 and the rubber bearing surfaces of layer 64 fully lubricating such rubber surfaces. Under these conditions of starting the rotation of shaft 80, the coefficient of friction of bearings 78 is very low when compared to the rubber bearing surfaces of layer 64. (Note Figure 10). The coefficient of starting friction of running the shaft 80 on plastic such as Teflon or ultra high molecular weight polyethylene is 0.10 compared to a coefficient of starting friction of 0.28 when started on rubber. At approximately 30 to 35 revolutions per minute of shaft 80, hose 73 is relieved of the pressurized fluid such that the respective plastic bearings 78 are moved radially outwardly thereby allowing shaft 80 to be resting completely on the lubricated rubber bearing layers 64 with clearance spaces between the respective bearings or staves 62 and shaft 80 allowing for the continued circulation of water. The coefficient of friction of the water lubricated rubber bearings is many times less than a bearing surface made from an ultra high molecular weight polyethylene materials.

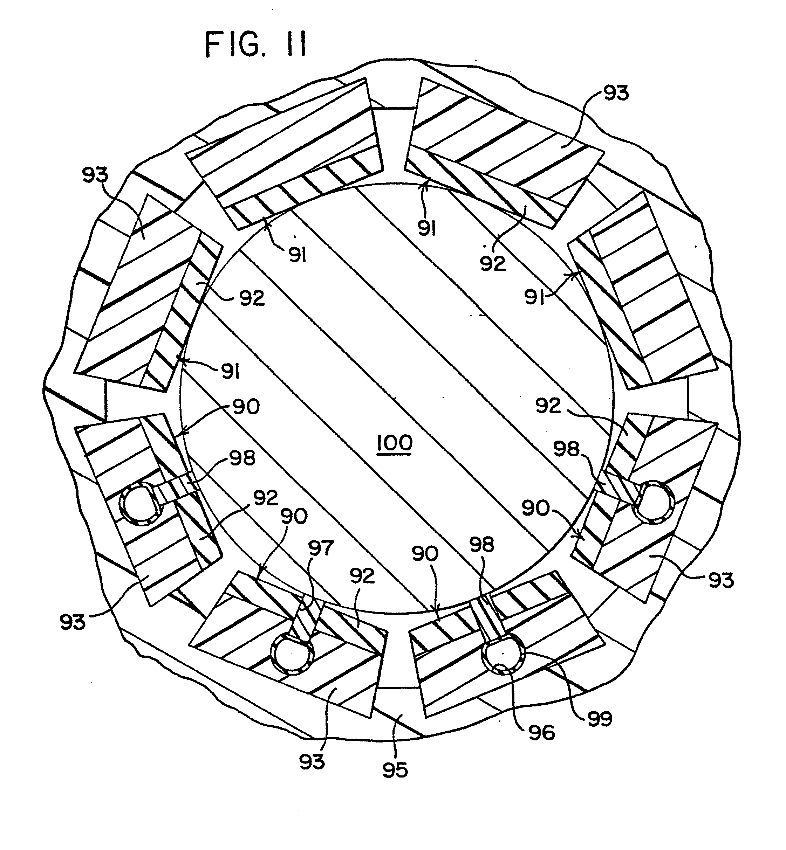

Modifications of the above described embodiment is to have the lower four bearing segments or staves constructed with moveable inserts similar to staves 62 in Figure 9 while having the remaining other bearing segments or staves similar to staves 15 of Figure 3 with rubber or elastomeric inner bearing surfaces contacting the drive shaft. Figure 11 depicts such a modification wherein the bearing assembly has a plurality of lower circumferentially spaced bearing segments or staves 90 and a plurality of upper bearing segments or staves 91. Each of these staves have an inner trapezoidal shaped elastomeric

-13-

bearing element 92 and an outer trapezoidal shaped bearing support element 93 that is made of an ultra-high molecular weight polyethylene material that is bonded to the elastomeric bearing element 92. Stave 91 is identical to stave 15 as described above while stave 90 is identical to stave 62 discussed above with respect to Figures 8 and 9. As in the prior embodiments, the outer shell 95 has a plurality of circumferentially spaced dovetailed grooves which receives staves 90 and 91. The staves 90 and 91 are trapezoidal in cross-section having linear outer flat faces and linear flat bearing surfaces. Each of the staves 90 have a bore 96 extending longitudinally therethrough with a recess 97 communicating with such bore 96. Such recess 97 may be a single recess for each stave or a pair of spaced recesses as in the embodiments shown in Figures 7-9. For purposes of discussion herein a single recess is sufficient to illustrate the invention. Such recess 97 receives a plastic insert 98 which is made from a material such as Teflon$^R$ or a material of ultra high molecular weight polyethylene. Located in the respective bores 96 are elongated hoses 99 or a single hose which as described in the prior embodiments is suitably connected to pressurized source of fluid pressure that can inflate such hose to selectively move the plastic insert 98 radially inwardly or outwardly to provide frictional support for the drive shaft 100 or allow shaft 100 to be fully supported by the elastomeric layers of staves 90 and 91.

Such bearing assembly is retained within a central bore of a housing similar to housing 59 of the prior described embodiment and retained therein

-14-

by retainer rings similar to rings 86 of the prior embodiment.

In operation of the above described bearing assembly assume that the shaft 100 is stationary and resting of the plastic inserts 98 of staves 90 while being contacted lightly by the upper staves 91. Fluid pressure is maintained in hose 99 to maintain such hose distended so as to maintain contact between shaft 100 and the inserts 98. Under these conditions, water circulates through the clearance spaces between the shaft 100 and the rubber bearing surfaces such that the coefficient of friction of stave-90 is very low as described above with respect to Figure 10. At approximately 30 to 35 revolutions per minute of shaft 100, hose 99 is relieved of pressure such that the respective plastic inserts 98 are moved radially away from shaft 100 to thereby put shaft 100 in frictional contact with the rubber lubricated bearing surfaces of the staves.

It will be apparent that, although a specific embodiment and certain modifications of the invention have been described in detail, the invention is not limited to the specifically illustrated and described constructions since variations may be made without departing from the principles of the invention.

-15-

## CLAIMS

What is claimed is:

1. A journal bearing assembly having a rigid support sleeve with a longitudinally extending center line , a plurality of circumferentially spaced first set of bearing elements mounted in said support sleeve, said first set of bearing elements having generally flat support surfaces for supporting a shaft, at least two of said first set of bearing elements having a bearing element therein for movement radially to and from said center line to selectively support a shaft journaled thereon independently of said first set of bearing elements that contained said moveable bearing elements, said radially moveable bearing elements defining a second set of bearing elements, power means connected to said second set of bearing elements operative to selectively move said second set of bearing elements radially to and from said center line, and said first set of bearing elements having a coefficient of friction that is different from the coefficient of friction of said second set of bearing elements.

2. A journal bearing assembly as set forth in claim 1 wherein the starting coefficient of friction of said first set of bearing elements is less than the starting coefficient of friction of said second set of bearing elements.

3. A journal bearing assembly as set forth in claim 1 wherein said first set of bearing elements are made from an elastomeric material, and said second set of bearing elements have radially disposed inner surfaces of plastic material.

4. A journal bearing assembly as set forth in claim 1 wherein said first set of bearing

-16-

elements are made from plastic materials, and said second set of bearing elements have radially disposed inner surfaces of elastomeric material.

5. A journal bearing assembly as set forth in claim 3 wherein said plastic material is an ultra-high molecular weight material.

6. A journal bearing assembly as set forth in claim 1 wherein said starting coefficient of friction of said second set of bearing elements is less than the starting coefficient of friction of said first set of bearing elements.

7. A cylindrical water-lubricated bearing comprising a plurality of circumferentially spaced bearing portions of resilient elastomeric material defining a first set of bearing elements, said bearing portion secured to an annular rigid supporting member, said circumferentially spaced bearing portions defining a central passageway with a central axis, at least two of said first set of bearing elements having inserts therein defining a second set of bearing elements moveable radially to and from said axis to project radially inwardly closer to said axis than the radial innermost surface of said first set of bearing elements from which said second set project, power operated means connected to said second set of bearing elements and operative to selectively radially move said second set of bearing elements.

8. A cylindrical water-lubricated bearing as set forth in claim 10 wherein said first set of bearing elements are made from an elastomeric material and said outermost face of said second set of bearing elements are made from a plastic material.

9. A bearing assembly for a rotating

-17-

shaft, said assembly having a rigid cylindrical shell, an elastomeric support member mounted in said shell, said support member having a plurality of circumferentially spaced longitudinally extending lubricant passageways, a shaft journaled on said elastomeric support members for frictional contact thereby, said shaft having a center line, at least two of said support member having recesses, a slide member of plastic material mounted in said recesses for movement toward and away from said center line, means operatively connected to said slide members for selectively moving said slide members radially inwardly toward said center line to selectively provide support for said shaft.

10. A bearing assembly for a rotating shaft comprising a shell member, a plurality of circumferentially spaced support members mounted in said shell defining an opening with a plurality of circumferentially spaced planar bearing surfaces defining a first set of bearing elements, a shaft journaled in said opening and operative to contact said support members for rotation thereon, said shaft having a center line, said support member having forwardly disposed portions of elastomeric material and operative to support said shaft for rotation, at least two of said support members having plastic inserts moveable radially to and from said center line, and actuating means connected to each of said plastic inserts for selectively moving said inserts toward said center line to contact said shaft for support in rotation thereon, and out of contact with said elastomeric material of said support member to provide a different coefficient of friction for said shaft.

FIG. 1

FIG. 2

FIG. 3

FIG. 4

FIG. 5

FIG. 6

FIG. 7

FIG. 8

FIG. 9

# FIG. 10

FIG. 11